(19)

**Europäisches Patentamt**
**European Patent Office**
**Office européen des brevets**

(11) **EP 3 849 386 B1**

(12) **EUROPEAN PATENT SPECIFICATION**

(45) Date of publication and mention
of the grant of the patent:
**19.07.2023 Bulletin 2023/29**

(21) Application number: **19797357.1**

(22) Date of filing: **11.09.2019**

(51) International Patent Classification (IPC):
***A47J 31/00*** *(2006.01)* ***A47J 31/46*** *(2006.01)*

(52) Cooperative Patent Classification (CPC):
**A47J 31/002; A47J 31/46**

(86) International application number:
**PCT/IB2019/000990**

(87) International publication number:
**WO 2020/053648 (19.03.2020 Gazette 2020/12)**

(54) **METHOD FOR PREPARING HOT WATER OF VARIABLE DISCHARGE TEMPERATURE AND BEVERAGE VENDING MACHINE FOR CONDUCTING THE METHOD**

VERFAHREN ZUR HEISSWASSERBEREITUNG MIT VARIABLER AUSGABETEMPERATUR UND GETRÄNKEAUTOMAT ZUR DURCHFÜHRUNG DES VERFAHRENS

PROCÉDÉ DE PRÉPARATION D'EAU CHAUDE À TEMPÉRATURE D'ÉVACUATION VARIABLE ET DISTRIBUTEUR AUTOMATIQUE DE BOISSONS POUR LA MISE EN ?UVRE DU PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2018 DE 102018007230**

(43) Date of publication of application:
**21.07.2021 Bulletin 2021/29**

(73) Proprietor: **Spengler GmbH & Co. KG**
**76646 Bruchsal (DE)**

(72) Inventor: **URECH, Lukas**
**68723 Plankstadt (DE)**

(74) Representative: **Kesselhut, Wolf**
**Reble & Kesselhut PartG mbB**
**Konrad-Zuse-Ring 32**
**68163 Mannheim (DE)**

(56) References cited:
**EP-A1- 1 354 543      EP-A1- 2 494 895**
**EP-B1- 2 494 895      WO-A1-00/47058**
**WO-A1-2016/164796**

**Description**

The invention relates to a method for preparing hot water of variable discharge temperature and a beverage vending machine for conducting the method according to the preamble of claims 1 and 9.

In the preparation of hot beverages such as coffee or tea, the temperature of the water during the brewing process is a decisive factor for the quality and taste of the hot beverage. The optimal brewing temperature for coffee, for example, lies between 85 °C and 91°C, in each case depending on the type of coffee. In the preparation of black tea, herbal or fruit tea, the brewing temperature is preferably 95 °C to 100 °C, and for green tea 68 °C to 91°C. White tea is preferably brewed at 55 °C to 60 °C, oolong tea at 85 °C to 90 °C, and jasmine tea at a temperature of 71 °C to 85 °C. The optimal brewing temperature may also vary depending each time on the type of tea and may have a smaller temperature range. In order to obtain the optimal quantity of released aromas and bitter substances, a precise setting of the water temperature is accordingly desirable.

One possibility for setting the water temperature consists of adapting the through-flow rate of cold water through a continuous flow heater, so that the water exits the heater having the desired temperature. Such a solution is described in DE 10 2017 102 956 A1. Here, the water temperature is continuously measured by a measurement sensor and the through-flow rate of the water through the continuous flow heater is controlled. Through-flow heaters, however, have the disadvantage that, after the device has been awakened from sleep mode, it take a long time to heat up and reach the operating temperature, whereupon more time passes from the selection of the desired beverage until it is discharged.

An alternative to systems that are based on a continuous flow heater is represented by systems having a hot water boiler. Such a system is described in DE 10 2011 076 216 A1. In this system, the hot water boiler is also operated during the sleep mode, so that hot water is available at any point in time, and thus the time required for the preparation of a hot beverage is reduced. In contrast to a system with a continuous flow heater that delivers the water having the desired temperature, in a system having a hot water boiler, the hot water from the boiler must be mixed with the appropriate quantity of cold water in order to obtain the desired temperature. In DE 10 2011 076216 A1, this is realized in a manner such that the corresponding quantity of cold water is intermixed with the hot water from the boiler by way of a second pump, a valve, or an aperture. In this case, however, there results the problem that the corresponding pumps, valves or apertures must be fabricated with the requisite precision for a precise temperature control, and are thereby comparatively expensive. Moreover, these do not make possible a linear through-flow control. The precise regulation of the water temperature in the case of the described device is therefore expensive and usually requires a sensor in the hot water region.

EP 0 249 4895 B1 describes an apparatus and a method for preparing hot water of variable discharge temperature in a beverage vending machine, in which a certain portion of cold water and a certain portion of hot water can be fed to an outlet by means of a 3/2-way valve, so that the water emerging from the outlet has the desired temperature. The document does not disclose to load the 3/2-way valve with a sequence of electrical pulses, whose duration is selected as a function of the specified discharge temperature of the hot water.

Accordingly, an object of the present invention is to create a method for preparing hot water of variable temperature, which enables a more precise setting of the temperature with a simultaneous reduction in production costs.

The object is achieved according to the invention by the features of claim 1.

Another object of the invention consists in creating a beverage vending machine for conducting the method according to the invention.

This object is achieved according to the invention by a device with the features of claim 9.

Additional features of the invention are described in the dependent claims.

According to the invention, in the method for preparing hot water of variable discharge temperature, a beverage vending machine contains a hot water generating system that comprises a cold water supply line and an electrical heatable boiler. The boiler has a cold water inlet on the boiler side that can be connected to the cold water supply line in order to supply cold water from the cold water supply line into the boiler, and a hot water outlet on the boiler side by way of which the water heated to a maximum discharge temperature $\vartheta_{boiler}$ is discharged from the boiler. To the hot water outlet on the boiler side is also connected in terms of flow a hot water outlet line that can be closed by at least one dispensing valve, by means of which the hot water that is provided with a specified discharge temperature can be taken from the hot water outlet line for preparing a hot beverage. The method is characterized in that the cold water supply line can be connected to the boiler-side cold water inlet or to the boiler-side hot water outlet alternatively by way of an electrically actuatable 3/2 way valve. For the discharge of hot water, this 3/2 way valve is loaded with a sequence of electrical pulses, whose pulse duration is selected as a function of the specified discharge temperature of the hot water.

According to the invention, in the base position of the 3/2 way valve, the 3/2 way valve connects the cold water supply line in terms of flow to the cold water supply line on the boiler side, so that when an electrical pulse is applied to the 3/2 way valve, the inlet of the 3/2 valve connected to the cold water supply line is connected in terms of flow to a second outlet of the 3/2 way valve for the duration of the electrical pulse. The latter second outlet is connected in terms of flow by way of a T-shaped or Y-shaped mixing tube or a static mixer to the boiler-side hot water outlet. In this way, at any point in time, only one flow connection is present between the cold water supply line and the hot water outlet line. Therefore, there results the advantage that no additional pump or aperture or additional valve is required in the cold water supply line of the T-shaped or Y-shaped mixing tube or the static mixer.

According to another concept lying at the basis of the invention, the pulse duration is determined as a function of the discharge temperature of the hot water, the temperature of the water in the cold water inlet supplied to the boiler, as well as the temperature of the water discharged from the hot water outlet of the boiler, according to the following relation:

$$T = T * (\vartheta_{boiler} - \vartheta_{target})/(\vartheta_{boiler} - \vartheta_{supply})$$

wherein

$\tau$ denotes the pulse duration,
T the period duration,
$\vartheta_{target}$ the specified discharge temperature of the water,
$\vartheta_{supply}$ the temperature of the water supplied to the boiler, and
$\vartheta_{boiler}$ the maximum discharge temperature of the water in the boiler.
* *sic;* to the cold water <u>inlet</u>?-Translator's note.

Correspondingly, starting from the temperature of the cold water, the temperature of the hot water in the boiler, as well as the desired discharge temperature, the pulse duration can be determined during which the second outlet of the 3/2 way valve is opened and cold water is intermixed with the water that is always heated in the boiler to a substantially constant temperature that can be set. In this way, the advantage results that, in contrast to a possible proportional valve, a nonlinear volumetric flow characteristic need not be observed, and thus an increased precision can be achieved for the setting of the discharge temperature.

According to another embodiment of the method according to the invention, the temperature of the water supplied to the boiler can be stored as a fixed value in an electronic memory or alternatively can be detected via a temperature sensor in the cold water supply line in order to take it into consideration in the determination of the pulse duration as a variable quantity. In this way, a temperature fluctuation of the cold water can be taken into consideration and compensated for via the formula presented above, without needing to conduct a new calibration of the system.

In order to reduce wear that occurs on the 3/2 way valve, according to another concept lying at the basis of the invention, it is provided that the 3/2 way valve is exclusively loaded with the sequence of electrical pulses if at least one of the dispensing valves is opened, whereby, for example, up to 7 dispensing valves can be provided, which are most preferably installed next to one another in a row.

According to another concept lying at the basis of the invention, at least one first and one second dispensing valve are provided, wherein, when the first dispensing valve is actuated, the 3/2 way valve is loaded with a first sequence of electrical pulses having a first pulse duration for the discharge of hot water with a first discharge temperature, and when the second dispensing valve is actuated, the 3/2 way valve is loaded with a second sequence of electrical pulses that possess a second pulse duration, in order to discharge hot water having a second discharge temperature.

According to another concept lying at the basis of the invention, the pulse durations corresponding to the different discharge temperatures of the water can be determined empirically, in particular by specifying a pulse duration and measuring the discharge temperature that is set, and can be stored in a memory of an electronic control device. When one of the dispensing valves is actuated, the value belonging thereto that is stored for the first or second pulse duration can be read out from the memory and supplied as an electrical signal to the electromechanically actuated 3/2 way valve. By storing the pulse duration in memory, an individual calibration can consequently be carried out for any beverage vending machine, whereby a high precision can be achieved for controlling the temperature of the water for the preparation of hot beverages.

In another embodiment of the method according to the invention, the pulse duration and/or the period duration can be varied during a dispensing process. By varying the pulse duration during the dispensing process, temperature fluctuations of the water can be both reduced as well as induced in a targeted manner. Thus, in a preferred embodiment, at the beginning of a dispensing process, electrical pulses with a short pulse duration can be used in order to compensate for heat losses of the water in the tubing that has cooled down after a preceding discharge process until the next hot water dispensing process. On the other hand, a variation of the period duration can be used in an advantageous way in order to reduce possible temperature fluctuations by a reduction in the period duration or to prevent wear on the 3/2 way valve by a longer period duration. In the preferred embodiment of the method according to the invention, the period duration is reduced at the beginning of the dispensing process in order to exactly obtain the desired temperature, and increases as soon as the volume that has been dispensed in a filling container reaches a magnitude such that the quantity of water that flows in during a period duration is small when compared to the water quantity that has already been introduced.

According to the invention, a beverage vending machine for conducting the method for preparing hot water of variable discharge temperature comprises a hot water generating system having a cold water supply line and an electrically heatable boiler. The boiler has a cold water inlet on the boiler side that can be connected to the cold water supply line in order to supply cold water from the cold water supply line into the boiler and a hot water outlet on the boiler side for the discharge of water heated to a maximum discharge temperature from the boiler. Moreover, to the hot water outlet on the boiler side is connected in terms of flow a hot water outlet line that can be closed by at least one dispensing valve, by means of which the hot water that is provided with a specified discharge temperature for preparing a hot beverage can be taken from the hot water outlet line into a brewing unit or a drinking vessel.

The beverage vending machine is characterized in that the cold water supply line can be connected alternatively to the boiler-side cold water inlet or to the boiler-side hot water outlet by way of an electrically actuated 3/2 way valve. For actuating the 3/2 way valve, an electronic control device is provided, by which the electrically actuatable 3/2 way valve is loaded with a sequence of electrical pulses for the flow connection of the cold water supply line to the boiler-side hot water outlet. Pulses involve electrical signals whose pulse duration is set by way of the control device corresponding to the specified discharge temperature of the hot water for a selected beverage. The beverage vending machine according to the invention is furthermore characterized in that in the base position of the 3/2 way valve, the 3/2 way valve connects the cold water supply line in terms of flow with the boiler-side cold water inlet, and in that when an electrical pulse is applied at the 3/2 way valve, the inlet of the 3/2 valve that is connected to the cold water supply line is connected in terms of flow to a second outlet of the 3/2 way valve for the duration of the electrical pulse, the latter second outlet being connected in terms of flow by way of a T-shaped or Y-shaped mixing tube or a static mixer to the boiler-side hot water outlet.

According to another concept lying at the basis of the invention, the 3/2 way valve comprises a first outlet connected to the boiler-side cold water inlet and the outlet of the T-shaped or Y-shaped mixing tube or the static mixer is connected in terms of flow by way of a line to the at least one dispensing valve. Preferably, at least one first and one second dispensing valve that can be actuated by the control device are provided. In this case, the control device loads the 3/2 way valve with a first sequence of electrical pulses that possess a first pulse duration when the first dispensing valve is actuated for the discharge of hot water having a first discharge temperature. In the same way, the control device loads the 3/2 way valve with a second sequence of electrical pulses that possess a second pulse duration when the second dispensing valve is actuated for the discharge of hot water having a second discharge temperature.

The invention will be described below with reference to the drawings on the basis of preferred embodiments. In the drawings:

Fig. 1 shows a schematic representation of the preferred embodiment of a beverage vending machine according to the invention;

Fig. 2a shows a schematic exemplary signal pattern of an electrical pulse $P_2$ in the case of a discharge temperature $\vartheta_{target2}$ of 90 °C;

Fig. 2b shows a schematic exemplary signal pattern of an electrical pulse $P_3$ in the case of a discharge temperature $\vartheta_{target3}$ of 70 °C;

Fig. 2c shows a schematic exemplary signal pattern of an electrical pulse $P_4$ in the case of a discharge temperature $\vartheta_{target4}$ of 60 °C;

Fig. 3 shows a schematic exemplary signal pattern of a sequence of pulses in which the pulse duration is varied; and

Fig. 4 shows a schematic exemplary signal pattern of a sequence of pulses in which the period duration is varied.

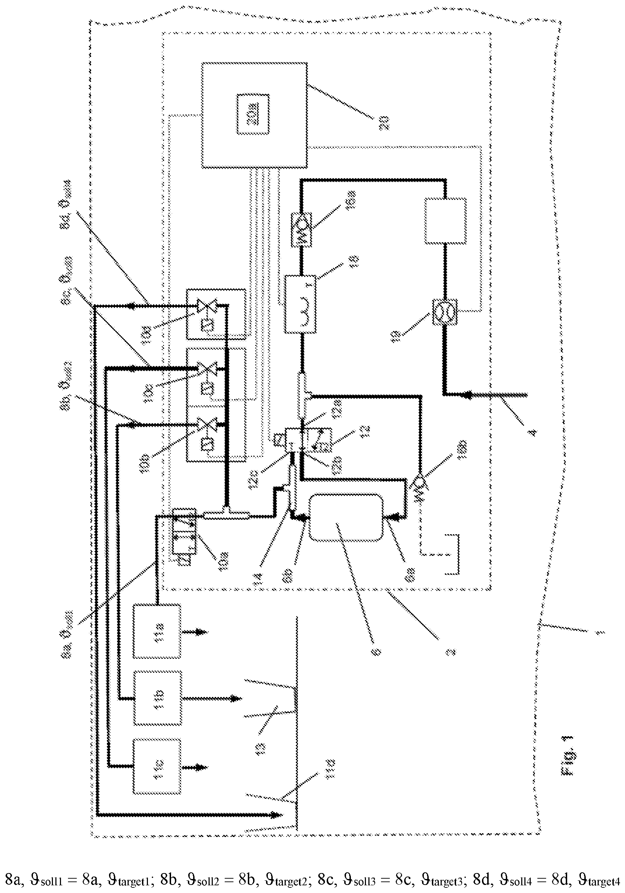

Figure 1 shows a preferred embodiment of the beverage vending machine 1 for conducting the method according to the invention for preparing hot water of variable discharge temperature. This machine contains a hot water generating system 2 that comprises a cold water supply line 4 and an electrically heatable boiler 6. The boiler 6 has a cold water inlet 6a on the boiler side connected to the cold water supply line 4 in order to supply cold water from the cold water supply line 4 into the boiler 6, and a hot water outlet 6b on the boiler side by way of which the heated water is discharged from the boiler 6. To the boiler-side hot water outlet 6b is also connected in terms of flow a hot water outlet line 8, which can be closed by at least one 3/2 way dispensing valve 10a or a dispensing valve 10b, 10c, 10d, by way of which the hot water for preparation of a hot beverage 13 can be taken from the hot water outlet line 8a, 8b, 8c, 8d into the brewing units 11a, 11b, 11c or a drinking vessel 11d. The brewing unit 11a is, in particular, an espresso brewing unit. Prior to a dispensing process, cooled water present in the line can be drained via the 3/2 way dispensing valve 10a, since the brewing volume for espresso is small in comparison to conventional coffee. The cold water supply line 4 is connected alternatively to the boiler-side cold water inlet 6a and the boiler-side hot water outlet 6b by way of an electrically actuatable 3/2 way valve 12. In the base position, this 3/2 way valve 12 connects the cold water supply line 4 in terms of flow to the boiler-side cold water inlet 6a via the first outlet 12b of the 3/2 way valve 12, so that when an electrical pulse P is applied at the 3/2 way valve 12, the inlet 12a of the 3/2 valve connected to the cold water supply line 4 is connected in terms of flow to the second outlet 12c at the 3/2 way valve for the duration of the electrical pulse P. The latter second outlet is connected in terms of flow by way of a T-shaped or Y-shaped mixing tube 14 or a static mixer 14 to the boiler-side hot water outlet 6b. In this way, at any point in time, only one flow connection is present between the cold water supply line 4 and the hot water outlet line 8.

Between the cold water supply line 4 and the inlet 12a of the 3/2 way valve 12 are arranged a through-flow meter 19, which can be employed for determining the quantity of water that is supplied or discharged, and a temperature sensor 18, which can be used for determining the temperature of the water supplied to the inlet 12a of the 3/2 way valve 12. In addition, as shown in Figure 1, a first spring-loaded check valve 16a can be provided between the cold water supply line 4 and the inlet 12a of the 3/2 way valve 12, in order to prevent a return flow of water into the cold water supply line 4 or into a filter, which is not discussed in more detail, when an overpressure occurs in the hot water generating system 2. Another, second spring-loaded check valve 16b that in this case operates as a draining valve or an overpressure valve may also be connected in terms of flow to the inlet 12a of the 3/2 way valve 12 via a T-branch. The dispensing valves 10a, 10b, 10c, 10d, the 3/2 way valve 12, the temperature sensor 18, as well as the through-flow meter 19 are connected to a control device 20 that contains an electronic memory 20a, in which, in particular, the temperature of the cold water detected by the temperature sensor 18 can be stored.

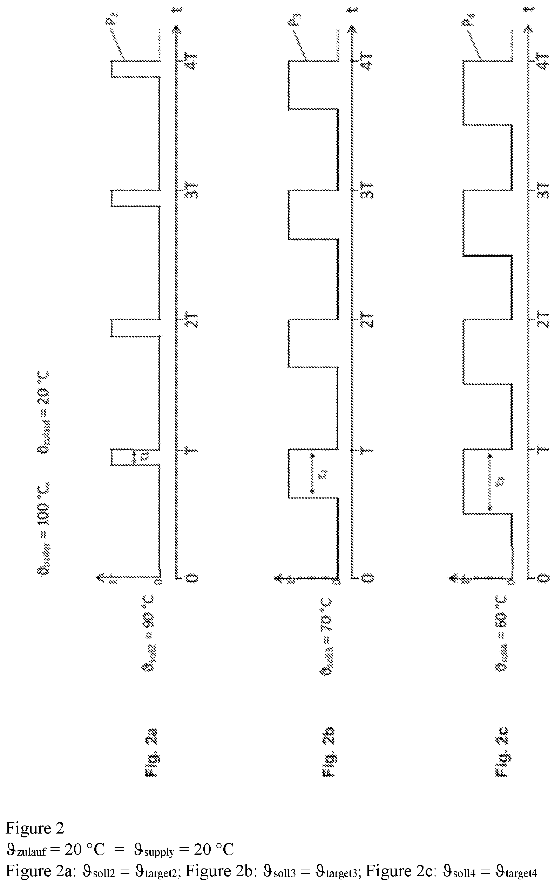

During a dispensing process, the control device 20 transmits electrical pulses $P, P_1, P_2, P_3, P_4$ with the pulse durations $\tau, \tau_1, \tau_2, \tau_3, \tau_4$ to the electrically actuatable 3/2 way valve 12. As is shown in Figures 2a, 2b and 2c, the pulse duration $\tau$ is a function of the discharge temperature $\vartheta_{target}$ of the hot water, wherein in these figures, the temperature of the supplied water $\vartheta_{supply}$ of 20 °C and the maximum discharge temperature of the boiler 6 $\vartheta_{boiler}$ of 100 °C were selected as fixed values, by way of example. The ratio between pulse duration $\tau$ and period duration T in this case is determined on the basis of the following formula, wherein additionally, a correction factor can also be provided, by way of which the pulse duration can be reduced or increased as a function of other quantities, such as, for example, the ambient temperature.

$$\tau = T * (\vartheta_{boiler} - \vartheta_{target})/(\vartheta_{boiler} - \vartheta_{supply})$$

In Figures 2a to 2c and the following figures, the signal value 0 represents an opening of the first outlet 12b and thus the base position of the 3/2 way valve 12, and the signal value 1 represents an opening of the second outlet 12c of the 3/2 way valve 12. With a higher discharge temperature, the pulse duration $\tau$ is correspondingly small, since only a small quantity of cold water has to be intermixed with the hot water provided in boiler 6. In contrast, the pulse duration $\tau$ at a discharge temperature of 60 °C under the selected conditions corresponds to approximately half the period duration, since the desired mixing ratio of hot and cold water amounts to 1:1.

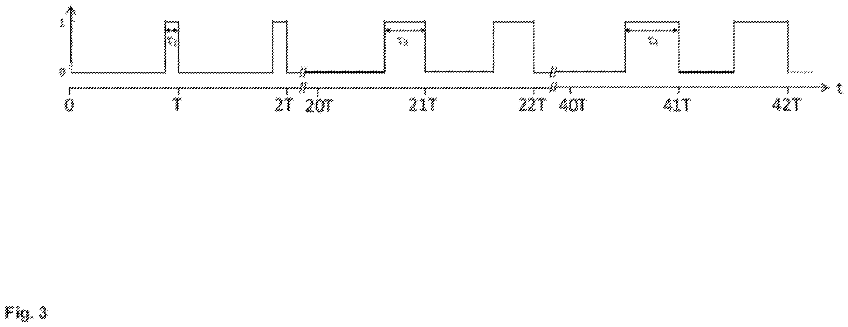

In Figure 3, a sequence of pulses P is shown, in which the pulse duration $\tau$ is varied over an arbitrarily selected time of a plurality of periods T, as is provided in the preferred embodiment of the method according to the invention. At the beginning of the dispensing process, the pulse duration is shorter than toward the end of the dispensing process, which has for a consequence that the temperature of the water discharged at the beginning of the dispensing process is higher than toward the end of the dispensing process.

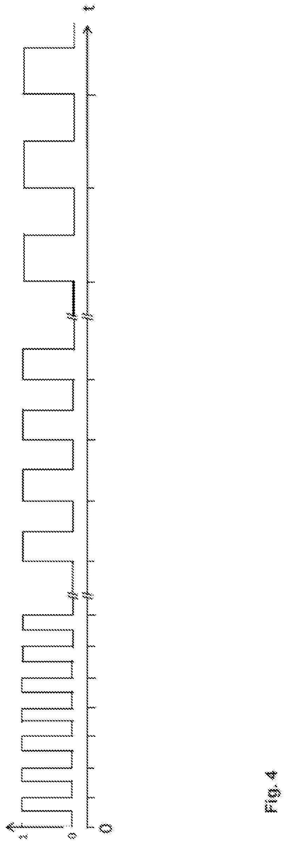

A preferred variation of the period duration T is shown in Figure 4 by way of example. At the beginning of a dispensing process, the period duration is shortened and thus smaller quantities of hot and cold water are thus alternatively required, so that a more rapid equilibration of temperature occurs between them. Toward the end of the dispensing process, the period duration is preferably increased, for example by a factor of 3, in order to reduce wear on the 3/2 way valve 12, whose service life is limited by a maximum number of switching cycles. The period duration can amount to 1s at the end of a dispensing process.

**List of reference characters**

| | |
|---|---|
| 1 | Beverage vending machine |
| 2 | Hot water generating system |
| 4 | Cold water supply line |
| 6 | Boiler |
| 6a | Boiler-side cold water inlet |
| 6b | Boiler-side hot water outlet |
| 8a,b,c,d | Hot water outlet lines to the dispensing valves |
| 10a | 3/2 way dispensing valve |
| 10b,c,d | Dispensing valve |

| 11a,b,c | Brewing unit |
| 11d | Drinking vessel |
| 12 | 3/2 way valve |
| 12a | Inlet of the 3/2 way valve |
| 12b | First outlet of the 3/2 way valve |
| 12c | Second outlet of the 3/2 way valve |
| 13 | Hot beverage |
| 14 | T-shaped or Y-shaped mixing tube or static mixer |
| 16a,b | First and second spring-loaded check valve |
| 18 | Temperature sensor |
| 19 | Through-flow meter |
| 20 | Control device |
| 20a | Electronic memory of the control device |
| $\vartheta_{boiler}$ | Maximum discharge temperature of the water in the boiler |
| $\vartheta_{supply}$ | Temperature of the water supplied to the boiler |
| $\vartheta_{target}$, $\vartheta_{target1}$, $\vartheta_{target2}$, $\vartheta_{target3}$, $\vartheta_{target4}$ | Specified discharge temperature of the water |
| $\tau$, $\tau_1$, $\tau_2$, $\tau_3$, $\tau_4$ | Pulse duration |
| T | Period duration |
| P, $P_1$, $P_2$, $P_3$, $P_4$ | Electrical pulse |

## Claims

1. A method for preparing hot water of variable discharge temperature in a beverage vending machine (1), wherein the beverage vending machine (1) contains a hot water generating system (2) comprising a cold water supply line (4), an electrically heatable boiler (6), which has a boiler-side cold water inlet (6a) that can be connected to the cold water supply line (4) for the supply of cold water from the cold water supply line (4) into the boiler (6) and a boiler-side hot water output (6b) for the discharge of water from the boiler (6) that is heated to a maximum discharge temperature ($\vartheta_{boiler}$), as well as a hot water outlet line (8) that is connected in terms of flow to the boiler-side hot water outlet (6b) and that can be closed by at least one dispensing valve (10a, 10b, 10c, 10d), by way of which the hot water provided with a specified discharge temperature ($\vartheta_{target}$, $\vartheta_{target1}$, $\vartheta_{target2}$, $\vartheta_{target3}$, $\vartheta_{target4}$) for the preparation of a hot beverage (13) can be taken from the hot water outlet line (8a, 8b, 8c, 8d), wherein the cold water supply line (4) can be connected alternatively to the boiler-side cold water inlet (6a) or to the boiler-side hot water outlet (6b) by way of an electrically actuatable 3/2 way valve (12), and wherein, for the discharge of hot water, the electronically actuable 3/2 way valve (12) can be loaded with a sequence of electrical pulses (P, $P_1$, $P_2$, $P_3$, $P_4$), whose pulse duration ($\tau$, $\tau_1$, $\tau_2$, $\tau_3$, $\tau_4$) is selected as a function of the specified discharge temperature ($\vartheta_{target}$, $\vartheta_{target1}$, $\vartheta_{target2}$, $\vartheta_{target3}$, $\vartheta_{target4}$) of the hot water, **characterized in that** in a base position of the 3/2 way valve (12), the 3/2 way valve (12) connects the cold water supply line (4) in terms of flow with the boiler-side cold water inlet (6a), and **in that** when an electrical pulse (P, $P_1$, $P_2$, $P_3$, $P_4$) is applied at the 3/2 way valve (12), the inlet (12a) of the 3/2 valve (12) that is connected to the cold water supply line (4) is connected in terms of flow to a second outlet (12c) of the 3/2 way valve (12) for the duration of the electrical pulse (P, $P_1$, $P_2$, $P_3$, $P_4$), the latter second outlet (12c) being connected in terms of flow by way of a T-shaped or Y-shaped mixing tube (14) or a static mixer (14) to the boiler-side hot water outlet (6b).

2. The method according to claim 1, **further characterized in that** the pulse duration ($\tau$) is determined as a function of the discharge temperature ($\vartheta_{target}$) of the hot water, the temperature ($\vartheta_{supply}$) of the water in the cold water inlet (6a) supplied to the boiler (6), as well as the temperature ($\vartheta_{boiler}$) of the water discharged from the hot water outlet (6b) of the boiler (6), according to the following relation:

$$\tau = T * (\vartheta_{boiler} - \vartheta_{target})/(\vartheta_{boiler} - \vartheta_{supply})$$

wherein

$\tau$ is the pulse duration,
T is the period duration,
$\vartheta_{target}$ is the specified discharge temperature of the water,
$\vartheta_{supply}$ is the temperature of the water supplied to the boiler, and

$\vartheta_{boiler}$ is the maximum discharge temperature of the water in the boiler.

3. The method according to claim 2, **further characterized in that** the temperature ($\vartheta_{supply}$) of the water supplied to the boiler (6) is stored as a fixed value in an electronic memory (20a) or is detected via a temperature sensor (18) in the cold water supply line (4) and is taken into consideration in the determination of the pulse duration ($\tau$) as a variable quantity.

4. The method according to one of the preceding claims, **further characterized in that** the 3/2 way valve (12) is exclusively loaded with the sequence of electrical pulses (P), if the at least one dispensing valve (10a, 10b, 10c, 10d) is opened.

5. The method according to claim 3, **further characterized in that** at least one first and one second dispensing valve (10a, 10b) are provided, wherein, when the first dispensing valve (10a) is actuated, the 3/2 way valve (12) is loaded with a first sequence of electrical pulses ($P_1$) having a first pulse duration ($\tau_1$) for the discharge of hot water having a first discharge temperature ($\vartheta_{target1}$), and when the second dispensing valve (10b) is actuated, the 3/2 way valve is loaded with a second sequence of electrical pulses ($P_2$) that possess a second pulse duration ($\tau_2$), in order to discharge hot water having a second discharge temperature ($\vartheta_{target2}$).

6. The method according to claim 5, **further characterized in that** the pulse durations ($\tau_1$ $\tau_2$) corresponding to the different discharge temperatures ($\vartheta_{target1}$, $\vartheta_{target2}$) of the water are determined empirically, in particular by specifying a pulse duration ($\tau$, $\tau_1$. $\tau_2$, $\tau_3$, $\tau_4$) and measuring the discharge temperature ($\vartheta_{target}$, $\vartheta_{target1}$, $\vartheta_{target2}$, $\vartheta_{target3}$, $\vartheta_{target4}$) that is set, and are stored in a memory (20a) of an electronic control device (20), and **in that** when the first or second dispensing valve (10a, 10b) is actuated, the stored value belonging thereto for the first or second pulse duration $\tau_1$. $\tau_2$) memory (20a) and supplied to the 3/2 way valve (12).

7. The method according to one of the preceding claims, **further characterized in that** the pulse duration ($\tau_1$, $\tau_2$, $\tau_3$, $\tau_4$) and/or the period duration T is variable during a dispensing process.

8. The method according to claim 7, **further characterized in that** the pulse duration ($\tau_1$, $\tau_2$, $\tau_3$, $\tau_4$) is shortened at the beginning of a dispensing process in comparison to the end of the same dispensing process in order to compensate for heat losses, and/or **in that** the period duration (T) is shortened at the beginning of a dispensing process in comparison to the end of the same dispensing process in order to reduce temperature fluctuations of the hot water discharged into a filling container.

9. A beverage vending machine (1) for conducting the method according to one of the preceding claims, containing a hot water generating system (2) comprising a cold water supply line (4), an electrically heatable boiler (6), which has a boiler-side cold water inlet (6a) that can be connected to the cold water supply line (4) for the supply of cold water from the cold water supply line (4) into the boiler (6) and a boiler-side hot water outlet (6b) for the discharge of water from the boiler (6) that has been heated to a maximum discharge temperature ($\vartheta_{boiler}$), as well as a hot water outlet line (8a, 8b, 8c, 8d) connected in terms of flow to the boiler-side hot water outlet (6b), the outlet line being able to be closed by at least one dispensing valve (10a, 10b, 10c, 10d), by way of which the hot water provided with a specified discharge temperature ($\vartheta_{target}$) for the preparation of a hot beverage (13) can be taken from the hot water outlet line (8a, 8b, 8c, 8d), wherein the cold water supply line (4) can be connected alternatively in terms of flow to the boiler-side cold water inlet (6a) or to the boiler-side hot water outlet (6b) by way of an electrically actuated 3/2 way valve (12), wherein an electronic control device (20) is provided, by which the 3/2 way valve (12) can be loaded with a sequence of electrical pulses (P) for the flow connection of the cold water supply line (4) to the boiler-side hot water outlet (6b), the pulse duration ($\tau$, $\tau_1$, $\tau_2$, $\tau_3$, $\tau_4$) of these pulses being set by the control device (20) corresponding to a specified discharge temperature ($\vartheta_{target}$, $\vartheta_{target1}$, $\vartheta_{target2}$, $\vartheta_{target3}$, $\vartheta_{target4}$) of the hot water, **characterized in that** in a base position of the 3/2 way valve (12), the 3/2 way valve (12) is configured to connect to the cold water supply line (4) in terms of flow with the boiler-side cold water inlet (6a), and **in that** when an electrical pulse (P, $P_1$, $P_2$, $P_3$, $P_4$) is applied at the 3/2 way valve (12), the inlet (12a) of the 3/2 valve (12) that is connected to the cold water supply line (4) is connected in terms of flow to a second outlet (12c) of the 3/2 way valve (12) for the duration of the electrical pulse (P, P1, P2, P3 , P4), the latter second outlet (12c) being connected in terms of flow by way of a T-shaped or Y-shaped mixing tube (14) or a static mixer (14) to the boiler-side hot water outlet (6b).

10. The beverage vending machine according to claim 9, **further characterized in that** the 3/2 way valve (12) comprises a first outlet (12b) connected to the boiler-side cold water inlet (6a) and wherein the outlet of the T-shaped or Y-shaped mixing tube (14) or the static mixer (14) is connected in terms of flow by way of a line to the at least one dispensing valve (lOa, 10b, 10c, 10d),

11. The beverage vending machine according to claim 9 or 10, **further characterized in that** at least one first and one second dispensing valve (10a, 10b) that can be actuated by the control device (20) are provided, and **in that** when the first dispensing valve (10a) is actuated, the control device (20) loads the 3/2 way valve (12) with a first sequence of electrical pulses ($P_1$) that possess a first pulse duration ($\tau_1$) for the discharge of hot water having a first discharge temperature ($\vartheta_{target1}$), and when the second dispensing valve (10b) is actuated, the control device (20) loads the 3/2 way valve (12) with a second sequence of electrical pulses ($P_2$) that possess a second pulse duration ($\tau_2$) for the discharge of hot water having a second discharge temperature ($\vartheta_{target2}$).

## Patentansprüche

1. Verfahren zur Bereitstellung von Heißwasser veränderlicher Ausgabetemperatur in einem Getränkeautomaten (1), wobei der Getränkeautomat (1) einen Heißwassererzeuger (2) enthält, der einen Kaltwasserzulauf (4), einen elektrisch beheizbaren Boiler (6), welcher einen mit dem Kaltwasserzulauf (4) verbindbaren boilerseitigen Kaltwassereinlass (6a) zur Zufuhr von kaltem Wasser aus dem Kaltwasserzulauf (4) in den Boiler (6) und einen boilerseitigen Heißwasserauslass (6b) zur Abfuhr von auf eine maximale Abgabetemperatur ($\vartheta_{boiler}$) erhitztem Wasser aus dem Boiler (6), sowie einen mit dem boilerseitigen Heißwasserauslass (6b) strömungsmäßig verbundenen Heißwasserablauf (8) umfasst, der durch wenigstens ein Zapfventil (10a, 10b, 10c, 10d) verschließbar ist, über welches das mit einer vorgegebenen Ausgabetemperatur ($\vartheta_{target}$, $\vartheta_{target1}$, $\vartheta_{target2}$, $\vartheta_{arget3}$, $\vartheta_{target4}$) bereit gestellte Heißwasser zur Zubereitung eines Heißgetränks (13) aus dem Heißwasserablauf (8a, 8b, 8c, 8d) entnehmbar ist, wobei der Kaltwasserzulauf (4) mit dem boilerseitigen Kaltwassereinlass (6a) oder dem boilerseitigen Heißwasserauslass (6b) wechselweise über ein elektronisch betätigbares 3/2 Wegeventil (12) verbindbar ist, wobei das elektronisch betätigbare 3/2 Wegeventil (12) zur Ausgabe von Heißwasser mit einer Folge von elektrischen Pulsen (P, $P_1$, $P_2$, $P_3$, $P_4$) beaufschlagbar ist, deren Pulsdauer ($\tau$, $\tau_1$, $\tau_2$, $\tau_3$, $\tau_4$) in Abhängigkeit von der vorgegebenen Ausgabetemperatur ($\vartheta_{target}$, $\vartheta_{target1}$, $\vartheta_{target2}$, $\vartheta_{arget3}$, $\vartheta_{target4}$) des Heißwassers gewählt ist, **dadurch gekennzeichnet, dass** das 3/2 Wegeventil (12) den Kaltwasserzulauf (4) in der Grundstellung des 3/2 Wegeventils (12) strömungsmäßig mit dem boilerseitigen Kaltwassereinlass (6a) verbindet, und dass beim Anliegen eines elektrischen Pulses (P, $P_1$, $P_2$, $P_3$, $P_4$) am 3/2 Wegeventil (12) der mit dem Kaltwasserzulauf (4) verbundene Eingang (12a) des 3/2 Wegeventils (12) für die Dauer des elektrischen Pulses (P, $P_1$, $P_2$, $P_3$, $P_4$) strömungsmäßig mit einem zweiten Ausgang (12c) des 3/2 Wegeventils (12) verbunden wird, welche letzterer zweiter Ausgang (12c) strömungsmäßig über ein T- oder Y-förmiges Mischrohr (14) oder einen statischen Mischer (14) mit dem boilerseitigen Heißwasserauslass (6b) verbunden ist.

2. Verfahren nach Anspruch 1,
   **dadurch gekennzeichnet, dass**
   die Pulsdauer ($\tau$) in Abhängigkeit von der Ausgabetemperatur ($\vartheta_{target}$) des Heißwassers, der Temperatur ($\vartheta_{supply}$) des dem Boiler (6) zugeführten Wassers im Kaltwassereinlass (6a) sowie der Temperatur ($\vartheta_{boiler}$) des aus dem Heißwasserauslass (6b) des Boilers (6) austretenden Wassers nach der folgenden Relation bestimmt wird:

$$\tau = T * (\vartheta_{boiler} - \vartheta_{target})/(\vartheta_{boiler} - \vartheta_{supply})$$

   worin

   $\tau$ die Pulsdauer,
   T die Periodendauer,
   $\vartheta_{target}$ die vorgegebene Ausgabetemperatur des Wassers,
   $\vartheta_{supply}$ die Temperatur des dem Boiler zugeführten Wassers, und
   $\vartheta_{boiler}$ die maximale Abgabetemperatur des Wassers im Boiler sind.

3. Verfahren nach Anspruch 2,
   **dadurch gekennzeichnet, dass**
   die Temperatur ($\vartheta_{supply}$) des dem Boiler (6) zugeführten Wassers als fester Wert in einem elektronischen Speicher (20a) abgelegt wird oder über einen Temperatursensor (18) im Kaltwasserzulauf (4) erfasst und bei der Bestimmung der Pulsdauer ($\tau$) als veränderliche Größe berücksichtigt wird.

4. Verfahren nach einem der vorhergehenden Ansprüche,
**dadurch gekennzeichnet, dass**
das 3/2 Wegeventil (12) ausschließlich dann mit der Folge von elektrischen Pulsen (P) beaufschlagt wird, wenn das wenigstens eine Zapfventil (10a, 10b, 10c, 10d) geöffnet ist.

5. Verfahren nach Anspruch 3,
**dadurch gekennzeichnet, dass**
wenigstens ein erstes und ein zweites Zapfventil (10a, 10b) vorgesehen sind, wobei das 3/2 Wegeventil (12) bei einer Betätigung des ersten Zapfventils (10a) mit einer ersten Folge von elektrischen Pulsen ($P_1$) mit einer ersten Pulsdauer ($\tau_1$) zur Ausgabe von Heißwasser mit einer ersten Ausgabetemperatur ($\vartheta_{target1}$) beaufschlagt wird, und das 3/2 Wegeventil (12) bei einer Betätigung des zweiten Zapfventils (10b) mit einer zweiten Folge von elektrischen Pulsen ($P_2$) mit einer zweiten Pulsdauer ($\tau_2$) zur Ausgabe von Heißwasser mit einer zweiten Ausgabetemperatur ($\vartheta_{target2}$) beaufschlagt wird.

6. Verfahren nach Anspruch 5,
**dadurch gekennzeichnet, dass**
die den unterschiedlichen Ausgabetemperaturen ($\vartheta_{target1}$, $\vartheta_{target2}$) des Wassers entsprechenden Pulsdauern ($\tau_1$, $\tau_2$) insbesondere durch Vorgeben einer Pulsdauer ($\tau$, $\tau_1$, $\tau_2$, $\tau_3$, $\tau_4$) und Messen der sich einstellenden Ausgabetemperatur ($\vartheta_{target}$, $\vartheta_{target1}$, $\vartheta_{target2}$, $\vartheta_{target3}$, $\vartheta_{target4}$) empirisch ermittelt und in einem Speicher (20a) einer elektronischen Steuerungseinrichtung (20) abgelegt werden, und dass bei einer Betätigung des ersten oder zweiten Zapfventils (10a, 10b) der zugehörige abgespeicherte Wert für die erste oder zweite Pulsdauer ($\tau_1$, $\tau_2$) aus dem Speicher (20a) ausgelesen und dem 3/2 Wegeventil (12) zugeführt wird.

7. Verfahren nach einem der vorhergehenden Ansprüche,
**dadurch gekennzeichnet, dass**
die Pulsdauer ($\tau_1$, $\tau_2$, $\tau_3$, $\tau_4$) und/oder die Periodendauer T während eines Zapfvorgangs veränderbar ist.

8. Verfahren nach Anspruch 7,
**dadurch gekennzeichnet, dass**
die Pulsdauer ($\tau_1$, $\tau_2$, $\tau_3$, $\tau_4$) zu Beginn eines Zapfvorgangs gegenüber dem Ende des selben Zapfvorgangs zur Kompensation von Wärmeverlusten verkürzt ist und/oder, dass die Periodendauer (T) zu Beginn eines Zapfvorgangs gegenüber dem Ende des selben Zapfvorgangs verkürzt ist, um Temperaturschwankungen des in einen Abfüllbehälter abgegebenen Heißwassers zu reduzieren.

9. Getränkeautomat (1) zur Durchführung des Verfahrens nach einem der vorhergehenden Ansprüche enthaltend einen Heißwassererzeuger (2), der einen Kaltwasserzulauf (4), einen elektrisch beheizbaren Boiler (6), welcher einen mit dem Kaltwasserzulauf (4) verbindbaren boilerseitigen Kaltwassereinlass (6a) zur Zufuhr von kaltem Wasser aus dem Kaltwasserzulauf (4) in den Boiler (6) und einen boilerseitigen Heißwasserauslass (6b) zur Abfuhr von auf eine maximale Abgabetemperatur ($\vartheta_{boiler}$) erhitztem Wasser aus dem Boiler (6), sowie einen mit dem boilerseitigen Heißwasserauslass (6b) strömungsmäßig verbundenen Heißwasserablauf (8a, 8b, 8c, 8d) umfasst, der durch wenigstens ein Zapfventil (10a, 10b, 10c, 10d) verschließbar ist, über welches das mit einer vorgegebenen Ausgabetemperatur ($\vartheta_{target}$) bereit gestellte Heißwasser zur Zubereitung eines Heißgetränks (13) aus dem Heißwasserablauf (8a, 8b, 8c, 8d) entnehmbar ist, wobei der Kaltwasserzulauf (4) wechselweise strömungsmäßig mit dem boilerseitigen Kaltwassereinlass (6a) oder dem boilerseitigen Heißwasserauslass (6b) über ein elektrisch betätigtes 3/2 Wegeventil (12) verbindbar ist,

wobei eine elektronische Steuerungseinrichtung (20) vorgesehen ist, durch welche das 3/2 Wegeventil (12) zur strömungsmäßigen Verbindung des Kaltwasserzulaufs (4) mit dem boilerseitigen Heißwasserauslass (6b) mit eine Folge von elektrischen Pulsen (P) beaufschlagbar ist, deren Pulsdauer ($\tau$, $\tau_1$, $\tau_2$, $\tau_3$, $\tau_4$) durch die Steuerungseinrichtung (20) entsprechend einer vorgegebenen Ausgabetemperatur ($\vartheta_{target}$, $\vartheta_{target1}$, $\vartheta_{target2}$, $\vartheta_{target3}$, $\vartheta_{target4}$) des Heißwassers eingestellt wird, **dadurch gekennzeichnet, dass**
das 3/2 Wegeventil (12) dazu eingerichtet ist, den Kaltwasserzulauf (4) in einer Grundstellung des 3/2 Wegeventils (12) strömungsmäßig mit dem boilerseitigen Kaltwassereinlass (6a) zu verbinden, und dass beim Anliegen eines elektrischen Pulses (P, P1, P2, P3, P4) am 3/2 Wegeventil (12) der mit dem Kaltwasserzulauf (4) verbundene Eingang (12a) des 3/2 Wegeventils (12) für die Dauer des elektrischen Pulses (P, P1, P2, P3, P4) strömungsmäßig mit einem zweiten Ausgang (12c) des 3/2 Wegeventils (12) verbunden wird, welche letzterer zweiter Ausgang (12c) strömungsmäßig über ein T- oder Y-förmiges Mischrohr (14) oder einen statischen Mischer (14) mit dem boilerseitigen Heißwasserauslass (6b) verbunden ist.

**10.** Getränkeautomat nach Anspruch 9,
**dadurch gekennzeichnet, dass**

das 3/2 Wegeventil (12) einen mit dem boilerseitigen Kaltwassereinlass (6a) verbundenen ersten Ausgang (12b) aufweist, und der Ausgang des T- oder Y-förmigen Mischrohrs (14) oder des statischen Mischers (14) strömungsmäßig über eine Zuleitung mit dem wenigstens einen Zapfventil (10a, 10b, 10c, 10d) in Strömungsverbindung steht.

**11.** Getränkeautomat nach Anspruch 9 oder 10,
**dadurch gekennzeichnet, dass**

wenigstens ein erstes und ein zweites, durch die Steuerungseinrichtung (20) betätigbares Zapfventil (10a, 10b) vorgesehen sind, und dass die Steuerungseinrichtung (20) das 3/2 Wegeventil (12) bei einer Betätigung des ersten Zapfventils (10a) zur Ausgabe von Heißwasser mit einer ersten Ausgabetemperatur ($\vartheta_{target1}$) mit einer ersten Folge von elektrischen Pulsen ($P_1$) beaufschlagt welche eine erste Pulsdauer ($\tau_1$) besitzen, und die Steuerungseinrichtung (20) das 3/2 Wegeventil (12) bei einer Betätigung des zweiten Zapfventils (10b) zur Ausgabe von Heißwasser mit einer zweiten Ausgabetemperatur ($\vartheta_{target2}$) mit einer zweiten Folge von elektri-schen Pulsen ($P_2$) beaufschlagt welche eine zweite Pulsdauer ($\tau_2$) besitzen.

**Revendications**

**1.** Procédé de préparation d'eau chaude de température de décharge variable dans un distributeur automatique de boissons (1), le distributeur automatique de boissons (1) contenant un système générant de l'eau chaude (2) comprenant une conduite d'alimentation en eau froide (4), une chaudière chauffable électriquement (6), qui a une entrée d'eau froide côté chaudière (6a) qui peut être raccordée à la conduite d'alimentation en eau froide (4) pour l'introduction d'eau froide depuis la conduite d'alimentation en eau froide (4) dans la chaudière (6) et une sortie d'eau chaude côté chaudière (6b) pour la décharge depuis la chaudière (6) d'eau qui est chauffée jusqu'à une température de décharge maximale ($\vartheta_{boiler}$), ainsi qu'une conduite de sortie d'eau chaude (8) qui est raccordée fluidiquement à la sortie d'eau chaude côté chaudière (6b) et qui peut être fermée par au moins une vanne de distribution (10a, 10b, 10c, 10d), au moyen de laquelle l'eau chaude fournie avec une température de décharge spécifiée ($\vartheta_{target}$, $\vartheta_{target1}$, $\vartheta_{target2}$, $\vartheta_{target3}$, $\vartheta_{target4}$) pour la préparation d'une boisson chaude (13) peut être prélevée à partir de la conduite de sortie d'eau chaude (8a, 8b, 8c, 8d),

dans lequel la conduite d'alimentation en eau froide (4) peut être raccordée alternativement à l'entrée d'eau froide côté chaudière (6a) ou à la sortie d'eau chaude côté chaudière (6b) au moyen d'une vanne 3/2 voies actionnable électriquement (12), et dans lequel,
pour la décharge d'eau chaude, la vanne 3/2 voies actionnable électriquement (12) peut être chargée avec une séquence d'impulsions électriques (P, $P_1$, $P_2$, $P_3$, $P_4$), dont la durée d'impulsion ($\tau$, $\tau_1$, $\tau_2$, $\tau_3$, $\tau_4$) est sélectionnée en fonction de la température de décharge Spécifiée ($\vartheta_{target}$, $\vartheta_{target1}$, $\vartheta_{target2}$, $\vartheta_{target3}$, $\vartheta_{target4}$) de l'eau chaude, **caractérisé en outre en ce que**,
dans la position de base de la vanne 3/2 voies (12), la vanne 3/2 voies (12) raccorde la conduite d'alimentation en eau froide (4) fluidiquement à l'entrée d'eau froide côté chaudière (6a), et **en ce que**, quand une impulsion électrique (P, $P_1$, $P_2$, $P_3$, $P_4$) est appliquée à la vanne 3/2 voies (12), l'entrée (12a) de la vanne 3/2 voies (12) qui est raccordée à la conduite d'alimentation en eau froide (4) est raccordée fluidiquement à la deuxième sortie (12c) de la vanne 3/2 voies (12) pendant la durée de l'impulsion électrique (P, $P_1$, $P_2$, $P_3$, $P_4$), cette dernière deuxième sortie (12c) étant raccordée fluidiquement au moyen d'un tube de mélange en forme de T ou en forme de Y (14) ou d'un mélangeur statique (14) à la sortie d'eau chaude côté chaudière (6b),

**2.** Procédé selon la revendication 1,
**caractérisé en outre en ce que**

la durée d'impulsion ($\tau$) est déterminée en fonction de la température de décharge ($\vartheta_{target}$) de l'eau chaude, de la température ($\vartheta_{supply}$) de l'eau dans l'entrée d'eau froide (6a) fournie à la chaudière (6), ainsi que de la température ($\vartheta_{boiler}$) de l'eau déchargée depuis la sortie d'eau chaude (6b) de la chaudière (6), selon la relation suivante :

$$T = T^\star (\vartheta_{boiler} - \vartheta_{target}) / (\vartheta_{boiler} - \vartheta_{supply}),$$

dans laquelle

$\tau$ est la durée d'impulsion,

T est la durée d'une période,

$\vartheta_{target}$ est la température de décharge spécifiée de l'eau,

$\vartheta_{supply}$ est la température de l'eau fournie à la chaudière, et

$\vartheta_{boiler}$ est la température de décharge maximale de l'eau dans la chaudière.

3. Procédé selon la revendication 2,
**caractérisé en outre en ce que**
la température ($\vartheta_{supply}$) de l'eau fournie à la chaudière (6) est stockée comme une valeur fixe dans une mémoire électronique (20a) ou est détectée par le biais d'un capteur de température (18) dans la conduite d'alimentation en eau froide (4) et est prise en compte dans la détermination de la durée d'impulsion ($\tau$) comme une quantité variable.

4. Procédé selon une des revendications précédentes,
**caractérisé en outre en ce que**
la vanne 3/2 voies (12) est exclusivement chargée avec la séquence d'impulsions électriques (P) si l'au moins une vanne de distribution (10a, 10b, 10c, 10d) est ouverte.

5. Procédé selon la revendication 3,
**caractérisé en outre en ce que**
au moins une première et une deuxième vanne de distribution (10a, 10b) sont prévues, dans lequel, quand la première vanne de distribution (10a) est actionnée, la vanne 3/2 voies (12) est chargée avec une première séquence d'impulsions électriques ($P_1$) ayant une première durée d'impulsion ($\tau_1$) pour la décharge d'eau chaude ayant une première température de décharge ($\vartheta_{target1}$), et quand la deuxième vanne de distribution (10b) est actionnée, la vanne 3/2 voies est chargée avec une deuxième séquence d'impulsions électriques ($P_2$) qui possèdent une deuxième durée d'impulsion ($\tau_2$), afin de décharger de l'eau chaude ayant une deuxième température de décharge ($\vartheta_{target2}$).

6. Procédé selon la revendication 5,
**caractérisé en outre en ce que**
les durées d'impulsion ($\tau_1$, $\tau_2$) correspondant aux différentes températures de décharge ($\vartheta_{target1}$, $\vartheta_{target2}$) de l'eau sont déterminées empiriquement, en particulier en spécifiant une durée d'impulsion ($\tau$, $\tau_1$, $\tau_2$, $\tau_3$, $\tau_4$) et en mesurant la température de décharge ($\vartheta_{target}$, $\vartheta_{target1}$, $\vartheta_{target2}$, $\vartheta_{target3}$, $\vartheta_{target4}$) qui est réglée, et sont stockées dans une mémoire (20a) d'un dispositif de commande électronique (20), et **en ce que**, quand la première ou la deuxième vanne de distribution (10a, 10b) est actionnée, la valeur stockée lui appartenant pendant la première ou la deuxième durée d'impulsion $\tau_1$, $\tau_2$) mémoire (20a) et fournie à la vanne 3/2 voies (12).

7. Procédé selon une des revendications précédentes,
**caractérisé en outre en ce que**
la durée d'impulsion ($\tau_1$, $\tau_2$, $\tau_3$, $\tau_4$) et/ou la durée d'une période T est variable pendant une opération de distribution.

8. Procédé selon la revendication 7,
**caractérisé en outre en ce que**
la durée d'impulsion ($\tau_1$, $\tau_2$, $\tau_3$, $\tau_4$) est raccourcie au début d'une opération de distribution par rapport à la fin de la même opération de distribution afin de compenser des pertes de chaleur, et/ou **en ce que** la durée d'une période (T) est raccourcie au début d'une opération de distribution par rapport à la fin de la même opération de distribution afin de réduire des fluctuations de température de l'eau chaude déchargée dans un récipient de remplissage.

9. Distributeur automatique de boissons (1) destiné à réaliser le procédé selon une des revendications précédentes, contenant un système générant de l'eau chaude (2) comprenant une conduite d'alimentation en eau froide (4), une chaudière chauffable électriquement (6), qui a une entrée d'eau froide côté chaudière (6a) qui peut être raccordée à la conduite d'alimentation en eau froide (4) pour l'introduction d'eau froide depuis la conduite d'alimentation en eau froide (4) dans la chaudière (6) et une sortie d'eau chaude côté chaudière (6b) pour la décharge depuis la chaudière (6) d'eau qui a été chauffée jusqu'à une température de décharge maximale ($\vartheta_{boiler}$), ainsi qu'une conduite de sortie d'eau chaude (8a, 8b, 8c, 8d) raccordée fluidiquement à la sortie d'eau chaude côté chaudière (6b), la conduite de sortie pouvant être fermée par au moins une vanne de distribution (10a, 10b, 10c, 10d), au moyen de laquelle l'eau chaude fournie avec une température de décharge spécifiée ($\vartheta_{target}$) pour la préparation d'une boisson chaude (13) peut être prélevée à partir de la conduite de sortie d'eau chaude (8a, 8b, 8c, 8d),

dans lequel la conduite d'alimentation en eau froide (4) peut être alternativement raccordée fluidiquement à l'entrée d'eau froide côté chaudière (6a) ou à la sortie d'eau chaude côté chaudière (6b) au moyen d'une vanne 3/2 voies actionnée électriquement (12), **caractérisé en ce qu'**un dispositif de commande électronique (20) est prévu, par lequel la vanne 3/2 voies (12) peut être chargée avec une séquence d'impulsions électriques (P) pour le raccordement fluidique de la conduite d'alimentation en eau froide (4) à la sortie d'eau chaude côté chaudière (6b), la durée d'impulsion ($\tau$, $\tau_1$, $\tau_2$, $\tau_3$, $\tau_4$) de ces impulsions étant réglée par le dispositif de commande (20) en correspondance avec une température de décharge spécifiée ($\vartheta_{target}$, $\vartheta_{target1}$, $\vartheta_{target2}$, $\vartheta_{target3}$, $\vartheta_{target4}$) de l'eau chaude,

**caractérisé en outre en ce que**,

dans la position de base de la vanne 3/2 voies (12), la vanne 3/2 voies (12) raccorde la conduite d'alimentation en eau froide (4) fluidiquement à l'entrée d'eau froide côté chaudière (6a), et **en ce que**, quand une impulsion électrique (P, $P_1$, $P_2$, $P_3$, $P_4$) est appliquée à la vanne 3/2 voies (12), l'entrée (12a) de la vanne 3/2 voies (12) qui est raccordée à la conduite d'alimentation en eau froide (4) est raccordée fluidiquement à la deuxième sortie (12c) de la vanne 3/2 voies (12) pendant la durée de l'impulsion électrique (P, $P_1$, $P_2$, $P_3$, $P_4$), cette dernière deuxième sortie (12c) étant raccordée fluidiquement au moyen d'un tube de mélange en forme de T ou en forme de Y (14) ou d'un mélangeur statique (14) à la sortie d'eau chaude côté chaudière (6b).

**10.** Dispositif selon la revendication 9,
**caractérisé en outre en ce que**
la vanne 3/2 voies (12) comprend une première sortie (12b) raccordée à l'entrée d'eau froide côté chaudière (6a), et dans lequel la sortie du tube de mélange en forme de T ou en forme de Y (14) ou du mélangeur statique (14) est raccordée fluidiquement au moyen d'une conduite à l'au moins une vanne de distribution (10a, 10b, 10c, 10d) .

**11.** Dispositif selon la revendication 10 ou 11,
**caractérisé en outre en ce que**

au moins une première et une deuxième vanne de distribution (10a, 10b), qui peuvent être actionnées par le dispositif de commande (20), sont prévues, et **en ce que**, quand la première vanne de distribution (10a) est actionnée, le dispositif de commande (20) charge la vanne 3/2 voies (12) avec une première séquence d'impulsions électriques ($P_1$) qui possèdent une première durée d'impulsion ($\tau_1$) pour la décharge d'eau chaude ayant une première température de décharge ($\vartheta_{target1}$), et,

quand la deuxième vanne de distribution (10b) est actionnée, le dispositif de commande (20) charge la vanne 3/2 voies (12) avec une deuxième séquence d'impulsions électriques ($P_2$) qui possèdent une deuxième durée d'impulsion ($\tau_2$) pour la décharge d'eau chaude ayant une deuxième température de décharge ($\vartheta_{target2}$).

Fig. 1

$8a, \vartheta_{\text{soll1}} = 8a, \vartheta_{\text{target1}}; 8b, \vartheta_{\text{soll2}} = 8b, \vartheta_{\text{target2}}; 8c, \vartheta_{\text{soll3}} = 8c, \vartheta_{\text{target3}}; 8d, \vartheta_{\text{soll4}} = 8d, \vartheta_{\text{target4}}$

Fig. 2a

Fig. 2b

Fig. 2c

Figure 2

$\vartheta_{zulauf} = 20\,°C = \vartheta_{supply} = 20\,°C$

Figure 2a: $\vartheta_{soll2} = \vartheta_{target2}$; Figure 2b: $\vartheta_{soll3} = \vartheta_{target3}$; Figure 2c: $\vartheta_{soll4} = \vartheta_{target4}$

Fig. 3

EP 3 849 386 B1

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102017102956 A1
- DE 102011076216 A1

- EP 02494895 B1